# EUROPÄISCHE PATENTSCHRIFT

(11) **EP 0 966 360 B1**
(45) Veröffentlichungstag und Bekanntmachung des Hinweises auf die Patenterteilung: **13.03.2002**
(21) Anmeldenummer: 98959702.6
(22) Anmeldetag: 01.10.1998
(51) Int. Cl.: B60H 1/34

(54) **FRISCHLUFT-DÜSENEINRICHTUNG**
FRESH AIR NOZZLE SYSTEM
SYSTEME DE BUSE D'AIR FRAIS

(30) Priorität: 17.10.1997 DE 19745932
(43) Veröffentlichungstag der Anmeldung: 29.12.1999
(73) Patentinhaber: Dr. Franz Schneider Kunststoffwerke GmbH & Co. KG, 96317 Kronach (DE)
(72) Erfinder: VOLK, Siegfried, D-96317 Kronach (DE)
(74) Vertreter: LOUIS, PÖHLAU, LOHRENTZ & SEGETH
(86) Internationale Anmeldenummer: DE9802919
(87) Internationale Veröffentlichungsnummer: WO9920480

(56) Entgegenhaltungen:
- EP-A- 0 064 769
- DE-A- 3 503 229
- DE-U- 8 214 184
- PATENT ABSTRACTS OF JAPAN vol. 008, no. 096 (M-294), 4. Mai 1984 & JP 59 011914 A (HONDA GIKEN KOGYO KK), 21. Januar 1984

## Beschreibung

Die Erfindung betrifft eine Frischluft-Düseneinrichtung für den Fahrgastraum eines Fahrzeugs, mit einer Schließklappe, die in einem Gehäuse einlaßseitig mittels einer Achse gelagert ist, und mit einem mit der Schließklappe verbundenen Betätigungselement, wobei das Gehäuse auslaßseitig einen kreisrunden Öffnungsrand aufweist, an welchem ein das Betätigungselement bildender Betätigungsring verdrehbar vorgesehen ist, der mit einem Zahnstangenelement versehen ist, das sich entlang eines Umfangsabschnittes des Betätigungsringes erstreckt und das mit einem Zahnradelement kämmt, das an der Achse der Schließklappe angebracht ist.

Eine derartige Frischluft-Düseneinrichtung ist aus der gattungsggemäßen DE 35 03 229 A1 bekannt. Bei dieser bekannten Düseneinrichtung ist das Zahnstangenelement mit seiner Zahnung in einer Ebene vorgesehen, so daß das an einer Drehachse starr vorgesehene, mit der Zahnung der Zahnstange kämmende Zahnradelement jederzeit, d.h. in jeder Drehwinkelstellung, mit derselben Kraft in kämmendem Eingriff ist.

Die DE 39 17 572 C2 offenbart eine Betätigungsvorrichtung für eine handverstellbare Luftströmregulierung einer Luftaustrittsöffnung mit einem Stellelement, das zum Einstellen einer gewünschten Winkellage an einer in ihrer Winkellage verstellbar in einem Schiebergehäuse angeordneten Blende der Luftstromregulierung angreift. Eine Handbetätigung ist zum Verstellen des Stellelementes mechanisch mit diesem verbunden und enthält einen bezüglich des Schiebergehäuses vorstehenden, von Hand erreichbaren Betätigungsabschnitt. Dort ist die Handbetätigungseinrichtung durch Reibeingriff an einem Sockel drehbar gelagert. Zum Ausüben einer Niederhaltekraft auf die Handbetätigung zu dem Sockel hin ist ein Halteelement vorgesehen, das mit der dem Sockel abgewandten Seite der Handbetätigung in Reibeingriff steht. Das Halteelement kann einen zentralen Zapfenabschnitt umfassen, relativ zu welchem die Handbetätigung winkelverstellbar ist, sowie einen konzentrisch zu dem zentralen Zapfenabschnitt ausgebildeten ringförmigen Berührungsabschnitt besitzen, an dem die Oberfläche zur Berührung mit einer zweiten Fläche der Handbetätigung vorgesehen ist. Der zentrale Zapfenabschnitt und der ringförmige Berührungsabschnitt können durch mindestens einen elastischen Stegabschnitt miteinander verbunden sein. Nachdem dort der ringförmige Berührungsabschnitt zu dem zentralen Zapfenabschnitt konzentrisch vorgesehen ist, sind auch hier die Kräfteverhältnisse - wie bei der Ausbildung gemäß der oben abgehandelten DE 35 03 229 A1 - in jeder Drehwinkelstellung des Halteelementes unverändert konstant, d.h. gleichbleibend.

Aus der DE 196 50 906 A1 ist eine Kraftfahrzeugentlüftungsvorrichtung bekannt, bei welcher ein Flattern der Klappen und somit eine Geräuschemission dadurch verhindert wird, daß biegesteife Klappen auf einem elastischen Dichtring ruhen und federbelastet sind. Die Schwenkbewegung der Klappen ist durch eine Viskobremse gedämpft.

Die US 55 38 470 offenbart eine Düseneinrichtung mit einem Ratschenelement.

Der Erfindung liegt die Aufgabe zugrunde, eine Frischluft-Düseneinrichtung der eingangs genannten Art zu schaffen, bei der beim Verdrehen des Betätigungsrings sich eine Änderung des Drehwiderstandes, d.h. des Kraftaufwandes derart ergibt, daß der Kraftaufwand im Bereich der beiden Endstellungen der Schließklappe vergrößert ist.

Diese Aufgabe wird bei einer Frischluft-Düseneinrichtung der eingangs genannten Art erfindungsgemäß dadurch gelöst, daß das Zahnradelement ein Antriebs-Zahnrad eines am Gehäuse vorgesehenen Zahnradgetriebes ist, das ein Abtriebs-Zahnrad aufweist, daß das Zahnstangenelement bogenförmig derartig gekrümmt vorgesehen ist, daß es mit seinen beiden in Umfangsrichtung voneinander entfernten Endabschnitten aus einer zur Längsachse des Gehäuses senkrechten Mittelebene nach rückwärts heraussteht, und daß das mit dem bogenförmig gekrümmten Zahnstangenelement kämmende Antriebs-Zahnrad einen Zahnring aufweist, der mit einer Zahnradnabe mittels federnd nachgiebiger Speichenelemente verbunden ist.

Durch eine solche Ausbildung wird erreicht, daß der Kraftaufwand zum Verdrehen des Betätigungsringes von einer Mittelstellung ausgehend zu den beiden Endstellungen hin jeweils zunimmt, so daß die beiden Endstellungen quasi durch den zunehmenden Drehwiderstand erkennbar bzw. fühlbar sind. Das bedeutet eine Verbesserung des Bedienungskomforts.

Erfindungsgemäß ergibt sich eine Veränderung des Drehwiderstandes beim Verdrehen des Betätigungsringes, wobei der Kraftaufwand zum Verdrehen des Betätigungsringes im Bereich der beiden Endabschnitte des bogenförmige gekrümmten Zahnstangenelementes vergrößert ist, weil die Zahnpressung dort zwischen dem Zahnstangenelement und dem Antriebszahnrad des Zahnradgetriebes vergrößert ist. Durch die Zunahme des Widerstandes beim Verdrehen des Betätigungsringes ist folglich feststellbar, daß die eine oder die andere Endstellung der Schließklappe, d.h. die Öffnungs- bzw. die Verschlußstellung der Schließklappe erreicht wird.

Dadurch, daß das mit dem bogenförmig gekrümmten Zahnstangenelement kämmende Antriebs-Zahnrad einen Zahnring aufweist, der mit einer Zahnradnabe mittels federnd nachgiebiger Speichenelemente verbunden ist, wird erreicht, daß das Antriebs-Zahnrad des Zahnradgetriebes zwischen dem bogenförmig gekrümmten Zahnstangenelement des Betätigungsringes und dem Zahnradgetriebe zur Verbindung des Betätigungsringes mit der Schließklappe bei ortsfester Lagerung der Zahnradnabe am Gehäuse der Frischluft-Düseneinrichtung entsprechend federnd nachgiebig ist, um in jeder Drehwinkelstellung des Betätigungsringes zwischen dem Antriebs-Zahnrad und dem bogenförmig gekrümmten Zahnstangenelement definiert kämmend in Eingriff zu sein.

Eine weiter optimierte Betätigung bzw. ein weiter optimiertes Kraft- bzw. Drehmomentverhalten für den Betätigungsring der erfindungsgemäßen Frischluft-Düseneinrichtung ist erzielbar, wenn ein Zahnrad des Zahnradgetriebes mit einem Zahnrad einer Fluidbremse kämmt. Derartige Fluidbremsen sind an sich bekannt, sie stehen preisgünstig zur Verfügung.

Das Zahnrad der Fluidbremse kann beispielsweise mit dem Antriebs-Zahnrad des Zahnradgetriebes kämmen.

Erfindungsgemäß kann der Betätigungsring vom Zahnstangenelement beabstandet mit einer in Umfangsrichtung vorgesehenen Ratschenfeinzahnung versehen sein, in die ein Ratschenelement federnd eingreift. Bei einer derartigen Ausbildung der erfindungsgemäßen Frischluft-Düseneinrichtung ist der Betätigungsring, der mit einem Stellring verbunden sein kann, also nicht einfach kontinuierlich verdrehbar, sondern in der Ratschenfeinzahnung entsprechenden feinen Winkelschritten, was sich auf das Verstell-Verhalten des Betätigungselementes der Frischluft-Düseneinrichtung zur wunschgemäßen Verstellung der Schließklappe vorteilhaft auswirken kann.

Beispielsweise ist es möglich, den Betätigungsring an seiner Sichtseite in Anlehnung an die Firmenidentität eines Fahrzeugherstellers wunschgemäß zu gestalten. Das gilt insbesondere für den Fall, daß bei der erfindungsgemäßen Frischluft-Düseneinrichtung der Betätigungsring mit einem Stellring verbunden ist. Dieser Stellring kann an der Sichtseite mit Eindellungen, mit Rillen, mit einer Riffelung oder wunschgemäß beliebig anders gestaltet sein.

Der Stell- bzw. der Betätigungsring kann glatt, mit Eindellungen, mit einer Bördelung o.dgl. gestaltet sein. Er kann aus Kunststoff oder aus Metall bestehen. Die Sichtseite kann blank oder lackiert sein. Sie kann beispielsweise auch eine Inmold-Dekoration aufweisen, um z.B. eine Holzmaserung nachzubilden. Der Ring kann in einem Zweikomponenten-Verfahren hergestellt werden.

Weitere Einzelheiten, Merkmale und Vorteile ergeben sich aus der nachfolgenden Beschreibung eines in der Zeichnung dargestellten Ausführungsbeispieles der erfindungsgemäßen Frischluft-Düseneinrichtung. Es zeigen:
- Fig. 1: eine teilweise aufgeschnittene Seitenansicht der Frischluft-Düseneinrichtung, und
- Fig. 2: eine weitere Seitenansicht der Frischluft-Düseneinrichtung gemäß Figur 1 aus einer Blickrichtung, die zur Blickrichtung gemäß Figur 1 um 180° entgegengesetzt ist.

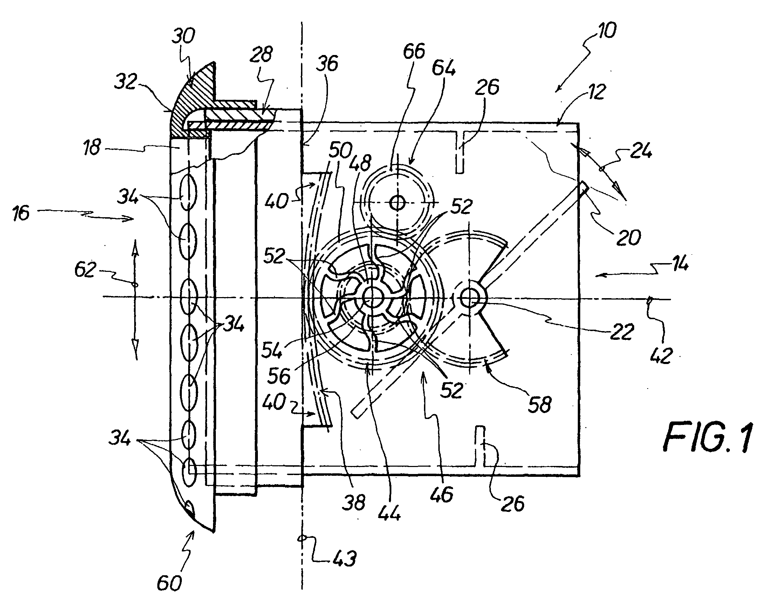

Figur 1 zeigt schematisch in einer Seitenansicht eine Ausbildung der Frischluft-Düseneinrichtung 10 teilweise aufgeschnitten. Die Frischluft-Düseneinrichtung 10 weist ein Gehäuse 12 auf, das an seiner Einlaß-Seite 14 beispielsweise einen abgerundet quadratischen Querschnitt und das an seiner Auslaß-Seite 16 mit einer kreisrunden Öffnung 18 bzw. einem kreisrunden Öffnungsrand ausgebildet ist. Einlaßseitig ist im Inneren des Gehäuses 12 eine Schließklappe 20 um eine Achse 22 zwischen einer Schließstellung und einer Öffnungsstellung verschwenkbar, was durch den bogenförmigen Doppelpfeil 24 angedeutet ist. Zum dichten Verschließen der Frischluft-Düseneinrichtung 10 ist das Gehäuse 12 innenseitig mit Verschlußrippen 26 ausgebildet, an welchen die Schließklappe 10 in der Schließstellung anliegt.

Am kreisrunden Öffnungsrand 18 des Gehäuses 12 ist ein Betätigungsring 28 drehbar und axial unbeweglich angebracht, der mit einem Stellring 30 verbunden ist. Der Stellring 30 kann an seiner Sichtseite 32 mit jeder gewünschten Oberflächenstrukturierung 34 ausgebildet sein.

Der Betätigungsring 28 ist an seinem rückseitigen Umfangsrand 36 mit einem Zahnstangenelement 38 versehen, das sich entlang eines Umfangsabschnittes des Betätigungsringes 28 erstreckt und das bogenförmig derart gekrümmt vorgesehen ist, daß es mit seinen beiden in Umfangsrichtung voneinander entfernten Endabschnitten 40 aus einer zur Längsachse 42 des Gehäuses 12 senkrechten Mittelebene 43 nach rückwärts heraussteht. Diese Mittelebene ist in Figur 1 durch die doppelt strichpunktierte Linie 43 angedeutet, sie ist zur Zeichnungsebene der Figur 1 senkrecht orientiert.

Mit dem bogenförmig gekrümmten Zahnstangenelement 38 ist ein Antriebs-Zahnrad 44 eines Zahnradgetriebes 46 kämmend in Eingriff. Das Antriebs-Zahnrad 44 weist eine Zahnradnabe 48 und einen Zahnring 50 auf, die miteinander mittels federnd nachgiebiger Speichenelemente 52 verbunden sind. Die Zahnradnabe 48 ist an einem Achsstummel 54 drehbar gelagert, der vom Gehäuse 12 wegsteht.

Mit der Zahnradnabe 48 des Antriebs-Zahnrades 44 ist ein Zwischenzahnrad 56 fest verbunden, das mit einem Abtriebs-Zahnrad 58 kämmend in Eingriff ist. Das Abriebs-Zahnrad 58 ist beispielsweise nur als Zahnrad-Segment gestaltet, es ist mit der Achse 22 der Schließklappe 20 fest verbunden.

In Figur 1 ist der Betätigungsring 28 mit dem Stellring 30, welche ein Betätigungselement 60 der Frischluft-Düseneinrichtung 10 bilden, in der Mittelstellung gezeichnet, in welcher das Antriebs-Zahnrad 44 sich am tiefsten mittleren Abschnitt des Zahnstangenelementes 38 befindet und die Schließklappe 20 zwischen ihrer möglich Schließstellung und ihrer möglichen Öffnungsstellung einen Winkel von ca. 45° einnimmt. Wird das Betätigungselement 60 in die eine oder in die andere Richtung verdreht, was in Figur 1 durch den Doppelpfeil 62 angedeutet ist, so wird das Zahnstangenelement 38 in Umfangsrichtung des Gehäuses 12 bewegt und somit das Zahnradgetriebe 46 in Bewegung versetzt, wodurch die Schließklappe 20 wunschgemäß verstellt wird. Der Einstellung eines bestimmten Kraft- bzw. Drehmomentverhaltens des Betätigungselementes 60 bei seiner Verstellung ist es dienlich, wenn das Zahnradgetriebe 46 mit einer Fluidbremse 64 kombiniert ist. Die Fluidbremse 64 weist zu diesem Zwecke ein Zahnrad 66 auf, das mit einem Zahnrad des Zahnradgetriebes 46 kämmt. In Figur 1 ist eine Ausbildung dargestellt, bei welcher das Zahnrad 66 der Fluidbremse 64 mit dem Antriebs-Zahnrad 44 des Zahnradgetriebes 46 kämmt.

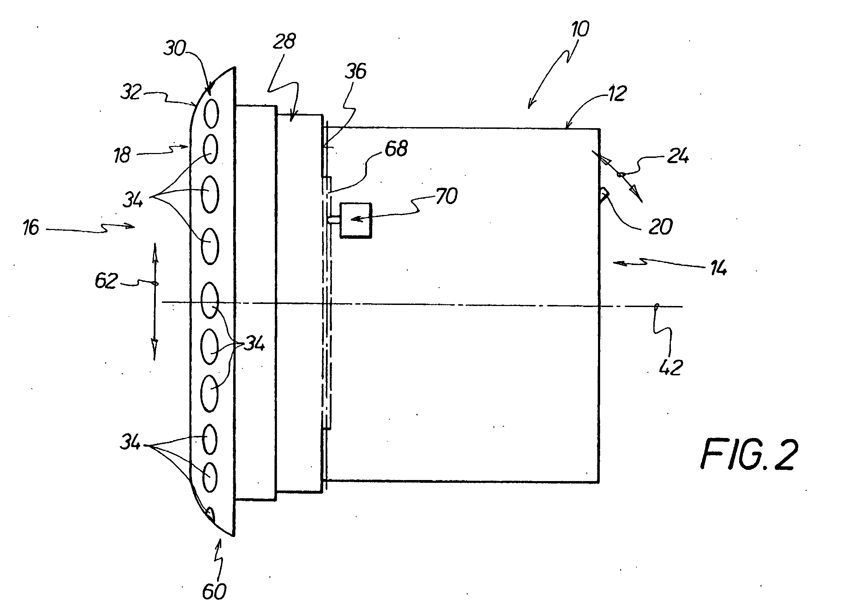

Um eine Verstellung des Betätigungselementes 60 in kleinsten Winkelschritten, d.h. sehr feinstufig, zu ermöglichen, ist der Betätigungsring 28 des ringförmigen Betätigungselementes 60 vom Zahnstangenelement 38 in Umfangsrichtung beabstandet mit einer in Umfangsrichtung vorgesehenen Ratschenfeinzahnung 68 ausgebildet, wie aus Figur 2 ersichtlich ist. In die Ratschenfeinzahnung 68 am entsprechenden Abschnitt des Umfangsrandes 36 des Betätigungsringes 28 greift ein Ratschenelement 70 federnd ein. Das Ratschenelement 70 kann beispielsweise von einem federnd gelagerten Stift, einer federnd gelagerten Kugel oder von einem Federelement in Gestalt einer Blattfeder od. dgl. gebildet sein.

## Patentansprüche

1. Frischluft-Düseneinrichtung für den Fahrgastraum eines Fahrzeuges, mit einer Schließklappe (20), die in einem Gehäuse (12) einlaßseitig mittels einer Achse (22) gelagert ist, und mit einem mit der Schließklappe (20) verbundenen Betätigungselement (60), wobei das Gehäuse (12) auslaßseitig einen kreisrunden Öffnungsrand (18) aufweist, an welchem ein das Betätigungselement (60) bildender Betätigungsring (28) verdrehbar vorgesehen ist, der mit einem Zahnstangenelement (38) versehen ist, das sich entlang eines Umfangsabschnittes des Betätigungsringes (28) erstreckt und das mit einem Zahnradelement (44) kämmt, das an der Achse (22) der Schließklappe (20) angebracht ist,
**dadurch gekennzeichnet,**
**daß** das Zahnradelement ein Antriebs-Zahnrad (44) eines am Gehäuse (12) vorgesehenen Zahnradgetriebes (46) ist, das ein Abtriebs-Zahnrad (58) aufweist, daß das Zahnstangenelement (38) bogenförmig derartig gekrümmt vorgesehen ist, daß es mit seinen beiden in Umfangsrichtung voneinander entfernten Endabschnitten (40) aus einer zur Längsachse (42) des Gehäuses (12) senkrechten Mittelebene (43) nach rückwärts heraussteht, und daß das mit dem bogenförmig gekrümmten Zahnstangenelement (38) kämmende Antriebs-Zahnrad (44) einen Zahnring (50) aufweist, der mit einer Zahnradnabe (48) mittels federnd nachgiebiger Speichenelemente (52) verbunden ist.

2. Frischluft-Düseneinrichtung nach Anspruch 1,
**dadurch gekennzeichnet,**
**daß** der Betätigungsring (28) mit einem Stellring (30) verbunden ist.

3. Frischluft-Düseneinrichtung nach Anspruch 1,
**dadurch gekennzeichnet,**
**daß** ein Zahnrad des Zahnradgetriebes (46) mit einem Zahnrad (66) einer Fluidbremse (64) kämmt.

4. Frischluft-Düseneinrichtung nach Anspruch 3,
**dadurch gekennzeichnet,**
**daß** das Zahnrad (66) der Fluidbremse (64) mit dem Antriebs-Zahnrad (44) des Zahnradgetriebes (46) kämmt.

5. Frischluft-Düseneinrichtung nach Anspruch 1,
**dadurch gekennzeichnet,**
**daß** der Bestätigungsring (28) vom Zahnstangenelement (38) beabstandet mit einer in Umfangsrichtung vorgesehenen Ratschenfeinzahnung (68) versehen ist, in die ein am Gehäuse (12) vorgesehenes Ratschenelement (70) federnd eingreift.

## Claims

1. Fresh-air nozzle device for the passenger space of a vehicle, with a closing flap (20) which is mounted in a housing (12), on its inlet side by means of a shaft (22), and with an actuating element (60) connected to the closing flap (20), the housing (12) having on its outlet side a circular orifice edge (18), at which is provided rotatably an actuating ring (28) which forms the actuating element (60) and is provided with a rack. element (38) which extends along a circumferential portion of the actuating ring (28) and meshes with a gearwheel element (44) attached to the shaft (22) of the closing flap (20), **characterized in that** the gearwheel element has a driving gearwheel (44) of a gearwheel mechanism (46) which is provided on the housing (12) and which has a driven gearwheel (58), **in that** the rack element (38) is curved arcuately, in such a way that it projects rearwards, with its two end portions (40) distant from one another in the circumferential direction, out of the mid-plane (43) perpendicular to the longitudinal axis (42) of the housing (12), and **in that** the driving gearwheel (44) meshing with the arcuately curved rack element (38) has a toothed ring (50) which is connected to a gearwheel hub (48) by means of resiliently flexible spoke elements (52).

2. Fresh-air nozzle device according to Claim 1, **characterized in that** the actuating ring (28) is connected to a setting ring (30).

3. Fresh-air nozzle device according to Claim 1, **characterized in that** a gearwheel of the gearwheel mechanism (46) meshes with a gearwheel (66) of a fluid brake (64).

4. Fresh-air nozzle device according to Claim 3, **characterized in that** the gearwheel (66) of the fluid brake (64) meshes with the driving gearwheel (44) of the gearwheel mechanism (46).

5. Fresh-air nozzle device according to Claim 1, **characterized in that** the actuating ring (28) is provided, at a distance from the rack element (38), with a fine ratchet toothing (68) which is provided in a circumferential direction and into which a ratchet element (70) provided on the housing (12) engages resiliently.

## Revendications

1. Système de buse à air frais, destiné à l'habitacle d'un véhicule, du type comportant un clapet de fermeture (20) monté du côté admission dans un boîtier (12) au moyen d'un axe (22) et un élément d'actionnement (60) relié au clapet de fermeture (20), le boîtier (12) présentant du côté évacuation une ouverture arrondie (28) sur laquelle est prévue rotative une bague d'actionnement (28), constituant l'élément d'actionnement (60), prévue avec un élément de crémaillère (38) qui s'étend le long d'une section périphérique de la bague d'actionnement (28) et qui engrène avec un élément de roue dentée (44) qui est monté sur l'axe (22) du volet de fermeture (20), **caractérisé en ce que** l'élément de roue dentée est constitué par une roue dentée menante (44) d'un mécanisme à engrenages (46) prévu sur le boîtier (12), et comportant une roue dentée menée (58), **en ce que** l'élément de crémaillère (38) est prévu recourbé en forme d'arc de manière telle que, par ses deux sections terminales (40) éloignées l'une de l'autre dans la direction périphérique, il dépasse vers l'arrière d'un plan médian (43) perpendiculaire à l'axe longitudinal (42) du boîtier (12), **et en ce que** la roue dentée menante (44) engrenant avec l'élément de crémaillère recourbé en forme d'arc présente une bague dentée (50) qui est reliée à un moyeu de roue dentée (48) au moyen d'un élément d'emmagasinage (52) élastiquement souple.

2. Système de buse à air frais selon la revendication 1, **caractérisé en ce que** la bague d'actionnement (28) est reliée à une bague de réglage (30).

3. Système de buse à air frais selon la revendication 1, **caractérisé en ce qu'**une roue dentée de l'engrenage (46) engrène avec une roue dentée (66) d'un frein pneumatique (64).

4. Système de buse à air frais selon la revendication 3, **caractérisé en ce que** le roue dentée (66) du frein pneumatique (64) engrène avec la roue dentée menante (44) du mécanisme à engrenage (46).

5. Système de buse à air frais selon la revendication 1, **caractérisé en ce que** la bague d'actionnement (28) est prévue écartée de l'élément de crémaillère (38) par un système de cliquet à fine denture (68) dans lequel s'accroche un élément d'encliquetage (70) prévu élastiquement dans le boîtier (12).
